# FASCICULE DE BREVET EUROPEEN

(11) **EP 1 811 346 B1**
(45) Date de publication et mention de la délivrance du brevet: **29.07.2009**
(21) Numéro de dépôt: 07356003.9
(22) Date de dépôt: 16.01.2007
(51) Int. Cl.: G03H 3/00, G01S 3/808

(54) **Dispositif de localisation de sources acoustiques et de mesure de leur intensité**
Vorrichtung für die Lokalisation und die Abmessung der Intensität der akustischen Quellen
Device for the localization and the measurement of the intensity of acoustic sources

(30) Priorité: 18.01.2006 FR 0600452
(43) Date de publication de la demande: 25.07.2007
(73) Titulaire: MICRODB, 69130 Ecully (FR); AIRBUS France, 31060 Toulouse (FR)
(72) Inventeur: Beguet, Bernard, 69210 Saint Bel (FR); Lamotte, Lucille, 69480 Lachassagne (FR)
(74) Mandataire: Maureau, Philippe

(56) Documents cités:
- US-A1- 2003 214 881
- PIET J F ET AL: "LOCALIZATION OF THE ACOUSTIC SOURCES OF THE A340 WITH A LARGE PHASED MICROPHONE ARRAY DURING FLIGHT TESTS" AIAA AEROACOUSTICS CONFERENCE, XX, XX, 2002, pages 1189-1199, XP008069756
- ROBERT H MACPHIE: "Thinned Coincident Arrays for the Direct Measurement of the Principal Solution in Radio Astronomy" IEEE TRANSACTIONS ON ANTENNAS AND PROPAGATION, IEEE SERVICE CENTER, PISCATAWAY, NJ, US, vol. 51, no. 4, avril 2003 (2003-04), XP011068784 ISSN: 0018-926X
- DAVIDSEN R E ET AL: "Sparse geometries for two-dimensional array transducers in volumetric imaging" ULTRASONICS SYMPOSIUM, 1993. PROCEEDINGS., IEEE 1993 BALTIMORE, MD, USA 31 OCT.-3 NOV. 1993, NEW YORK, NY, USA,IEEE, 31 octobre 1993 (1993-10-31), pages 1091-1094, XP010115058 ISBN: 0-7803-1278-3
- MUSHA T ET AL: "Adaptive signal processing for reducing nearby generated flow noise" APPLIED ACOUSTICS, ELSEVIER PUBLISHING, GB, vol. 66, no. 10, octobre 2005 (2005-10), pages 1206-1217, XP004982501 ISSN: 0003-682X

## Description

La présente invention a pour objet un dispositif de localisation de sources acoustiques et de mesure de leur intensité.

Le confort acoustique apparaît aujourd'hui comme un problème important, en particulier dans le cas de riverains, vivant notamment en zone urbaine ou à proximité d'un aéroport.

Afin de rendre les moyens de transport moins bruyant, il est nécessaire de mieux comprendre les divers phénomènes acoustiques apparaissant au niveau de l'enveloppe externe des véhicules. En effet, certaines zones d'un véhicule apparaissent comme des sources de bruit nuisibles. Ainsi, dans le cas d'un avion, les réacteurs ou les trains d'atterrissage sont des zones privilégiées pour l'émission de bruits. Toutefois, d'autres zones peuvent également être concernées, leur intensité étant généralement plus faible.

Il est alors important de localiser, non seulement les sources acoustiques de forte intensité, mais aussi celle d'intensité plus réduite. Leur localisation précise et la détermination de leur intensité permet alors de développer des systèmes moins bruyants et donc plus adaptés à la vie quotidienne.

Les dispositifs de mesure connus utilisent un ensemble de microphones et des moyens de traitement des signaux issus des différents microphones. Les traitements usuels des signaux consistent à établir un hologramme des sources acoustiques, c'est-à-dire une répartition des pressions ou intensités acoustiques en différents points de calcul d'une même surface, en réalisant, pour chaque point de calcul de l'hologramme, la somme des pressions acoustiques mesurées par les microphones, en tenant compte du retard des pressions acoustiques correspondant au temps de parcours entre le point de calcul et un microphone.

L'hologramme obtenu est constitué de lobes correspondant à la position des sources acoustiques et de lobes dus à la taille limitée de l'antenne. Ceux-ci sont appelés respectivement lobes principaux et lobes secondaires.

On obtient alors par le biais de ces systèmes une localisation des sources acoustiques dont la résolution est d'autant meilleure que la fréquence est élevée et que l'antenne constituée par les microphones est grande.

Cependant des problèmes se posent dans le cas de sources émettant en haute fréquence. Dans ce cas le maillage de l'antenne, c'est-à-dire la distance entre les microphones, doit être suffisamment fin. Si tel n'est pas le cas, des lobes parasites appelés lobes images apparaissent sur l'hologramme, en plus des sources réelles. Afin d'éviter un tel phénomène, l'utilisation d'un grand nombre de microphones est indispensable, ce qui augmente les coûts nécessaires à la mise en oeuvre d'un tel dispositif.

Afin de résoudre ce problème, un dispositif de localisation de sources acoustiques et de mesure de leur intensité a été développé, comprenant une antenne comportant deux branches. Un tel dispositif est notamment décrit dans l'article « Localization of the acoustic sources of the A 340 with a large phased microphone array during flight tests, J.F. Piet from ONERA et al., AIAA 2002-2506 ». Les branches sont disposées en croix et sont chacune équipées d'une pluralité de microphones. Ce dispositif comprend en outre un système de traitement des signaux issus des microphones permettant d'établir un hologramme des sources acoustiques, c'est-à-dire une répartition des pressions ou des intensités acoustiques en différents points de calcul d'une même surface, en réalisant, pour chaque point de calcul de l'hologramme, la somme des pressions acoustiques mesurées par les microphones d'une même branche en tenant compte du retard des pressions acoustiques, puis en multipliant, pour chaque point de calcul de l'hologramme, les valeurs de pression obtenues par addition des pressions acoustiques mesurées par les microphones d'une même branche.

Cette solution est intéressante car elle permet d'obtenir un bon compromis entre la résolution obtenue et le nombre de microphones de l'antenne. Cependant elle a l'inconvénient de faire apparaître sur l'hologramme des lobes secondaires de forte intensité, en comparaison avec les lobes principaux, et de générer l'apparition de lobes supplémentaires appelés lobes fantômes. Les lobes fantômes apparaissent du fait du traitement multiplicatif, lorsqu'il existe plusieurs sources acoustiques de localisation différente.

La présente invention vise à remédier à ces inconvénients. A cet effet, elle concerne un dispositif de localisation de sources acoustiques et de mesure de leur intensité comprenant :
une antenne comportant au moins deux sous-antennes, chaque sous-antenne comportant au moins deux branches disposées en croix ou en étoile, chaque branche étant équipée d'une pluralité de microphones, et
un système de traitement des signaux issus des microphones,
le dispositif étant agencé pour établir, pour une fréquence supérieure à une valeur déterminée f_{c}, un hologramme des sources acoustiques, c'est-à-dire une répartition des pressions ou intensités acoustiques en différents points de calculs d'une même surface,
en réalisant, pour chaque point de calcul de l'hologramme, la somme des pressions acoustiques mesurées par les microphones d'une même sous-antenne en tenant compte du retard des pressions acoustiques correspondant au temps de parcours entre le point de calcul et un microphone,
puis en multipliant, pour chaque point de calcul de l'hologramme, les valeurs de pressions obtenues par addition des pressions acoustiques mesurées par les microphones des différentes sous-antennes.

Ce dispositif permet de limiter l'influence des parasites pouvant apparaître sur l'hologramme. Ces parasites qui sont les lobes secondaires, les lobes images et les lobes fantômes, ont alors des intensités faibles en comparaison avec les lobes définissant les sources réelles. Par conséquent ces lobes se démarquent nettement sur l'hologramme par rapport aux lobes parasites, ce qui permet de localiser avec une meilleure précision les sources acoustiques réelles.

Préférentiellement, les sous-antennes sont disposées dans des plans parallèles et décalées angulairement.

Avantageusement, le dispositif est agencé pour établir un hologramme des sources acoustiques, pour une fréquence inférieure à la valeur déterminée f_{c}, en réalisant, pour chaque point de calcul de l'hologramme, la somme des pressions acoustiques mesurées par les microphones de l'antenne en tenant compte du retard des pressions acoustiques.

Lorsque l'on a plusieurs sous-antennes juxtaposées, l'avantage de conserver un traitement additif sur l'ensemble des microphones pour une fréquence inférieure à f_{c} est de garder une bonne résolution en basse fréquence. En effet, la résolution est liée à la taille totale de l'antenne. Au-delà de f_{c}, le traitement multiplicatif a l'avantage d'éliminer les lobes images. De plus, le fait que le traitement additif est effectué pour une antenne avec plusieurs branches et non sur une seule ligne comme dans le cas de la publication précitée, conduit à diminuer de manière importante les lobes fantômes.

Il est à noter que lorsque le traitement multiplicatif est utilisé, la résolution devient proportionnelle à la taille d'une sous-antenne seule.

Ainsi, selon une caractéristique de l'invention, le dispositif est agencé pour établir, pour une fréquence inférieure à la valeur déterminée f_{c}, un hologramme des sources acoustiques en réalisant, pour chaque point de calcul de l'hologramme, la somme des pressions acoustiques mesurées par les microphones de l'antenne en tenant compte du retard des pressions acoustiques.

Un traitement additif des signaux issus de l'ensemble des microphones de l'antenne est donc réalisé seul, de sorte que la puissance de calcul nécessaire soit réduite de manière considérable.

Selon une possibilité avantageuse, la valeur déterminée de fréquence f_{c} est égale à c.D/p.I où c est la célérité du son, D est la distance entre l'objet et l'antenne, p est la distance entre deux microphones, I est la longueur de l'objet à analyser.

La détermination de la valeur de la fréquence f_{c} est notamment fonction de la précision, des intervalles de distance entre les microphones et de la distance entre la source à localiser et les microphones.

Selon une autre caractéristique, les branches d'une même sous-antenne sont réparties angulairement de façon régulière et les sous-antennes sont décalées d'un angle correspondant à une fraction de l'angle entre deux branches.

Cette disposition permet généralement d'obtenir la plus forte réduction des lobes images et des lobes secondaires.

Avantageusement, les sous-antennes sont décalées d'un angle correspondant à la moitié de l'angle entre deux branches.

Selon une caractéristique supplémentaire de l'invention, le système de traitement des signaux issus des microphones est adapté au traitement de signaux émis par des sources mobiles.

Selon une possibilité avantageuse, les branches des sous-antennes sont droites.

Les branches peuvent notamment comporter entre 7 et 30 microphones, ce qui permet d'obtenir un bon compromis entre la résolution obtenue et les coûts de mise en ouvre d'un tel dispositif.

Chacune de ces branches peut en particulier avoir une longueur comprise entre 1 mètre et 20 mètres, de manière à obtenir un bon compromis entre la résolution et l'encombrement des sous-antennes.

Selon une caractéristique particulière de l'invention, les microphones sont régulièrement répartis, ce qui permet de bénéficier d'un meilleur contraste.

En outre, afin de réduire les coûts de mise en oeuvre du dispositif, les microphones peuvent être identiques.

De toute façon l'invention sera bien comprise à l'aide de la description qui suit, en référence au dessin schématique annexé représentant, à titre d'exemples non limitatifs, plusieurs formes d'exécution de ce dispositif.

Figure 1 est une vue de dessus d'une antenne constituée de deux sous-antennes à deux branches représentant une première forme d'exécution dans laquelle les deux sous-antennes sont juxtaposées

Figure 2 est une vue de dessus d'une antenne constituée de deux sous-antennes à deux branches représentant une seconde forme d'exécution dans laquelle les deux sous-antennes sont coaxiales

Figure 3 est une vue de dessus d'une antenne constituée de deux sous-antennes à trois branches représentant une troisième forme d'exécution dans laquelle les deux sous-antennes sont juxtaposées.

Figure 4 est une vue de dessus d'une antenne constituée de deux sous-antennes à trois branches représentant une quatrième forme d'exécution dans laquelle les deux sous-antennes sont coaxiales.

Figure 5 est un schéma bloc illustrant le traitement des signaux issus des microphones de l'antenne pour une fréquence supérieure à une valeur déterminée f_{c}.

Figure 6 est un schéma bloc illustrant le traitement des signaux issus des microphones de l'antenne pour une fréquence inférieure à une valeur déterminée f_{c}.

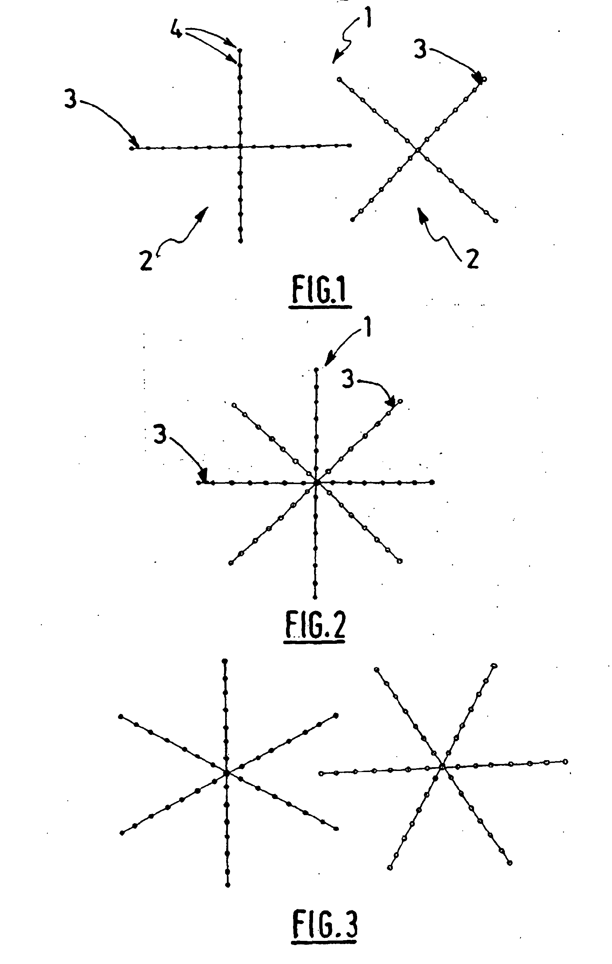

La figure 1 représente une antenne 1 composée de deux sous-antennes 2 juxtaposées chaque sous-antenne 2 étant composée de deux branches 3. Ces dernières sont droites et disposées en croix, l'intersection étant par exemple située sensiblement au milieu de chaque branche. L'agencement représenté décrit une croix dont l'angle entre les deux branches est d'environ 90°. Préférentiellement, les deux branches 3 ont des longueurs identiques, la longueur des branches étant par exemple comprise entre 5 et 20 mètres dans le cas où l'on s'intéresse à un avion situé à environ 100 mètres du sol, ou encore entre 1 et 3 mètres si l'on s'intéresse à une voiture passant à 3 mètres de l'antenne.

Les deux sous-antennes 2 sont disposées dans des plans coplanaires. Elles sont décalées d'un angle correspondant à la moitié de l'angle entre deux branches, dans ce cas égal à 45°.

Les branches 3 sont le support d'une pluralité de microphones 4 permettant l'enregistrement des émissions sonores des sources acoustiques, appelées également sources de bruit. Un nombre de microphone adapté est compris entre 7 et 30, judicieusement égal à 15.

La figure 2 représente une autre forme d'exécution dont l'antenne 1 est composée de deux sous-antennes 2 à deux branches 3, les deux sous-antennes étant décalées angulairement de 45°. Ces dernières forment des croix dont les centres sont coïncidents.

La figure 3 représente une troisième forme d'exécution dont l'antenne 1 est composée de deux sous-antennes 2 en forme d'étoile à trois branches 3, les deux sous-antennes étant décalées angulairement de 30°. Ces dernières sont coplanaires et juxtaposées.

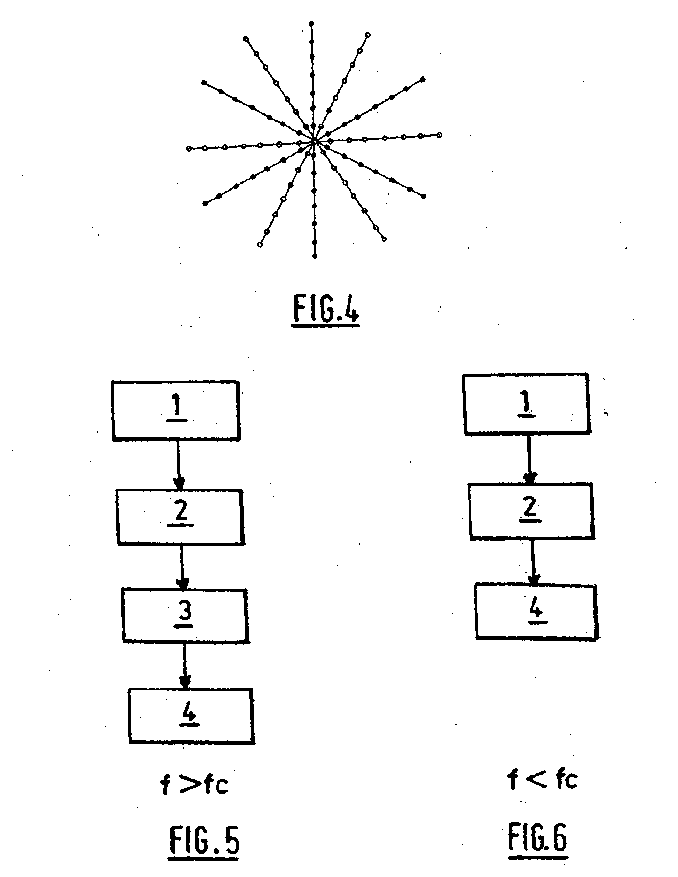

Enfin, la figure 4 représente une quatrième forme d'exécution dont l'antenne 1 est composée de deux sous-antennes 2 à trois branches 3, les deux sous-antennes étant décalées angulairement de 30°. Ces dernières forment des étoiles dont les centres sont coïncidents.

Un grand nombre de branches permet d'améliorer la précision de localisation mais augmente également la complexité de mise en oeuvre d'une telle localisation.

Le dispositif de localisation est ainsi composé d'une antenne, préférentiellement selon l'une des variantes proposées ci-dessus, et d'un système de traitement des signaux issus des microphones.

L'antenne est placée à distance d'une source fixe ou mobile. Dans le cas de la localisation des sources sonores d'un avion par exemple, l'antenne peut être placée horizontalement au niveau du sol, l'avion effectuant un ou plusieurs passages au-dessus de l'antenne, à une altitude d'approximativement 100 mètres.

Cet agencement permet d'établir, pour une fréquence supérieure à une valeur déterminée f_{c}, un hologramme des sources acoustiques, c'est-à-dire une répartition des pressions ou intensités acoustiques en différents points de calcul d'une même surface. Pour cela, conformément à la figure 5, les pressions acoustiques issues des sources acoustiques sont captées par les microphones de chaque sous-antenne (ETAPE 1), puis la somme des pressions acoustiques mesurées par les microphones d'une même sous-antenne est réalisée, en tenant compte de leur retard correspondant au temps de parcours entre le point de calcul et un microphone (ETAPE 2). Ensuite, pour chaque point de calcul, les valeurs des pressions obtenues par addition sont multipliées (ETAPE 3). Enfin, le résultat obtenu est représenté, d'une manière connue en soi, sous la forme d'un hologramme, sur lequel apparaissent visuellement les informations concernant la localisation des sources.

Le décalage angulaire entre les sous-antennes et le traitement des informations issus des microphones tel que défini ci-dessus, en particulier l'opération de multiplication, permettent de limiter l'influence des effets parasites.

Comme vu précédemment, pour des fréquences inférieures à une valeur déterminée, il peut être avantageux de ne pas réaliser l'opération de multiplication. C'est pourquoi, le dispositif de localisation des sources peut également être agencé de telle sorte que pour des fréquences inférieures à f_{c}, l'établissement de l'hologramme soit réalisé à partir du calcul, pour chaque point de l'hologramme, en sommant les pressions acoustiques mesurées par les microphones de l'ensemble de l'antenne et non plus uniquement d'une sous-antenne, en tenant compte comme précédemment, du retard des pressions acoustiques.

La figure 6 décrit un tel dispositif dans lequel l'étape de multiplication (ETAPE 3) a été supprimée. On réalise donc simplement l'acquisition des données, à savoir la mesure des pressions acoustiques par les microphones (ETAPE 1), puis l'étape d'addition telle que définie ci-dessus (ETAPE 2), le résultat étant finalement représenté sous la forme d'un hologramme (ETAPE 4).

Dans le cas d'une antenne constituée de deux sous-antennes à deux branches, soit respectivement 1.1 et 1.2 les traitements additifs des première et seconde branche de la première sous-antenne et 2.1 et 2.2 les traitements additifs des première et seconde branche de la seconde sous-antenne.

En-dessous de f_{c}, on effectue le traitement global 1.1+1.2 +2.1+ 2.2 et au-dessus de f_{c}, on effectue le traitement global (1.1+1.2)x(2.1+2.2).

Comme il va de soi, l'invention ne se limite pas aux seules formes d'exécution de ce système, décrites ci-dessus à titre d'exemple, mais elle embrasse au contraire toutes les variantes. C'est ainsi notamment que le nombre de branches peut être supérieur à trois, que celles-ci peuvent avoir des longueurs différentes, que les sous-antennes peuvent former des croix ou des étoiles irrégulières c'est-à-dire présentant des assymétries, que ces sous-antennes peuvent être décalées d'un angle différent de la moitié de l'angle entre deux branches, que les sous-antennes peuvent être non coplanaires, ou que les branches peuvent être courbes.

## Revendications

1. Dispositif de localisation de sources acoustiques et de mesure de leur intensité, comprenant
une antenne (1) comportant au moins deux sous-antennes (2) chaque sous-antenne comportant au moins deux branches (3) disposées en croix ou en étoile, chaque branche (3) étant équipée d'une pluralité de microphones (4), et
un système de traitement des signaux issus des microphones,
le dispositif étant agencé pour établir, pour une fréquence supérieure à une valeur déterminée f_{c}, un hologramme des sources acoustiques, c'est-à-dire une répartition des pressions ou intensités acoustiques en différents points de calculs d'une même surface,
en réalisant, pour chaque point de calcul de l'hologramme, la somme des pressions acoustiques mesurées par les microphones d'une même sous-antenne en tenant compte du retard des pressions acoustiques correspondant au temps de parcours entre le point de calcul et un microphone, le dispositif étant **caractérisé en ce que** pour chaque point de calcul de l'hologramme, les valeurs de pressions obtenues par addition des pressions acoustiques mesurées par les microphones des différentes sous-antennes sont multipliées entre elles.

2. Dispositif selon la revendication 1, **caractérisé en ce que** les sous-antennes (2) sont disposées dans des plans parallèles et sont décalées angulairement.

3. Dispositif selon l'une des revendications 1 et 2, **caractérisé en ce qu'**il est agencé pour établir un hologramme des sources acoustiques, pour une fréquence inférieure à la valeur déterminée f_{c}, en réalisant, pour chaque point de calcul de l'hologramme, la somme des pressions acoustiques mesurées par les microphones de l'antenne en tenant compte du retard des pressions acoustiques.

4. Dispositif selon l'une des revendications 1 à 3, **caractérisé en ce** la valeur déterminée de fréquence f_{c} est égale à c.D/p.I où c est la célérité du son, D est la distance entre l'objet et l'antenne, p est la distance entre deux microphones, I est la longueur de l'objet à analyser.

5. Dispositif selon l'une des revendications 1 à 4, **caractérisé en ce** les branches (3) d'une même sous-antenne (2) sont réparties angulairement de façon régulière et que les sous-antennes (2) sont décalées d'un angle correspondant à une fraction de l'angle entre deux branches (3).

6. Dispositif selon l'une des revendications 1 à 5, **caractérisé en ce** les sous-antennes (2) sont décalées d'un angle correspondant à la moitié de l'angle entre deux branches (3).

7. Dispositif selon l'une des revendications 1 à 6, **caractérisé en ce que** le système de traitement des signaux issus des microphones (4) est adapté au traitement de signaux émis par des sources mobiles.

8. Dispositif selon l'une des revendications 1 à 7, **caractérisé en ce que** les branches (3) des sous-antennes (2) sont droites.

9. Dispositif selon l'une des revendications 1 à 8, **caractérisé en ce que** chaque branche (3) comporte entre 7 et 30 microphones.

10. Dispositif selon l'une des revendications 1 à 9, **caractérisé en ce que** chaque branche (3) a une longueur comprise entre 1 m et 20 m.

11. Dispositif selon l'une des revendications 1 à 10, **caractérisé en ce que** les microphones (4) sont régulièrement répartis.

12. Dispositif selon l'une des revendications 1 à 11, **caractérisé en ce que** les microphones (4) sont identiques.

## Claims

1. Device for locating acoustic sources and for measuring their intensity, comprising
an antenna (1) comprising at least two sub-antennas (2), each sub-antenna comprising at least two branches (3) disposed in the form of a cross or star, each branch (3) being equipped with a plurality of microphones (4), and
a system for processing the signals arising from the microphones,
the device being designed to establish, for a frequency above a determined value f_{c}, a hologram of the acoustic sources, that is to say a distribution of the acoustic pressures or intensities at various calculation points of one and the same surface,
by producing, for each calculation point of the hologram, the sum of the acoustic pressures measured by the microphones of one and the same sub-antenna while taking account of the delay of the acoustic pressures corresponding to the journey time between the calculation point and a microphone,
the device being **characterized in that** for each calculation point of the hologram, the values of pressures obtained by adding up the acoustic pressures measured by the microphones of the various sub-antennas are multiplied together.

2. Device according to Claim 1, **characterized in that** the sub-antennas (2) are disposed in parallel planes and are angularly offset.

3. Device according to one of Claims 1 and 2, **characterized in that** it is designed to establish a hologram of the acoustic sources, for a frequency below the determined value f_{c}, by producing, for each calculation point of the hologram, the sum of the acoustic pressures measured by the microphones of the antenna while taking account of the delay of the acoustic pressures.

4. Device according to one of Claims 1 to 3, **characterized in that** the determined frequency value f_{c} is equal to c.D/p.1 where c is the speed of sound, D is the distance between the object and the antenna, p is the distance between two microphones, 1 is the length of the object to be analysed.

5. Device according to one of Claims 1 to 4, **characterized in that** the branches (3) of one and the same sub-antenna (2) are distributed angularly in a regular manner and that the sub-antennas (2) are offset by an angle corresponding to a fraction of the angle between two branches (3).

6. Device according to one of Claims 1 to 5, **characterized in that** the sub-antennas (2) are offset by an angle corresponding to half the angle between two branches (3).

7. Device according to one of Claims 1 to 6, **characterized in that** the system for processing the signals arising from the microphones (4) is adapted to the processing of signals emitted by mobile sources.

8. Device according to one of Claims 1 to 7, **characterized in that** the branches (3) of the sub-antennas (2) are straight.

9. Device according to one of Claims 1 to 8, **characterized in that** each branch (3) comprises between 7 and 30 microphones.

10. Device according to one of Claims 1 to 9, **characterized in that** each branch (3) has a length of between 1 m and 20 m.

11. Device according to one of Claims 1 to 10, **characterized in that** the microphones (4) are regularly distributed.

12. Device according to one of Claims 1 to 11, **characterized in that** the microphones (4) are identical.

## Patentansprüche

1. Vorrichtung zur Lokalisierung von Schallquellen und zur Messung ihrer Intensität, die aufweist
eine Antenne (1), die mindestens zwei Unterantennen (2) aufweist, wobei jede Unterantenne mindestens zwei Zweige (3) aufweist, die kreuz- oder sternförmig angeordnet sind, wobei jeder Zweig (3) mit mehreren Mikrofonen (4) ausgestattet ist, und
ein System zur Verarbeitung der von den Mikrofonen kommenden Signale,
wobei die Vorrichtung eingerichtet ist, um für eine höhere Frequenz als ein vorbestimmter Wert f_{c} ein Hologramm der Schallquellen zu erstellen, d.h. eine Verteilung der Schalldrücke oder Schallintensitäten an verschiedenen Berechnungspunkten einer gleichen Fläche,
indem für jeden Berechnungspunkt des Hologramms die Summe der von den Mikrofonen einer gleichen Unterantenne gemessenen Schalldrücke unter Berücksichtigung der Verzögerung der Schalldrücke entsprechend der Streckenzeit zwischen dem Berechnungspunkt und einem Mikrophon gebildet wird,
wobei die Vorrichtung **dadurch gekennzeichnet ist, dass** für jeden Berechnungspunkt des Hologramms die durch Addition der von den Mikrofonen der verschiedenen Unterantennen gemessenen Schalldrücke erhaltenen Druckwerte miteinander multipliziert werden.

2. Vorrichtung nach Anspruch 1, **dadurch gekennzeichnet, dass** die Unterantennen (2) in parallelen Ebenen angeordnet und winkelmäßig versetzt sind.

3. Vorrichtung nach einem der Ansprüche 1 und 2, **dadurch gekennzeichnet, dass** sie eingerichtet ist, um ein Hologramm der Schallquellen für eine geringere Frequenz als der bestimmte Wert f_{c} zu erstellen, indem für jeden Berechnungspunkt des Hologramms die Summe der von den Mikrofonen der Antenne gemessenen Schalldrücke unter Berücksichtigung der Verzögerung der Schalldrücke gebildet wird.

4. Vorrichtung nach einem der Ansprüche 1 bis 3, **dadurch gekennzeichnet, dass** der bestimmte Frequenzwert f_{c} gleich c.D/p.1 ist, wobei c die Schallgeschwindigkeit, D die Entfernung zwischen dem Gegenstand und der Antenne, p die Entfernung zwischen zwei Mikrofonen, 1 die Länge des zu analysierenden Gegenstands ist.

5. Vorrichtung nach einem der Ansprüche 1 bis 4, **dadurch gekennzeichnet, dass** die Zweige (3) einer gleichen Unterantenne (2) winkelmäßig gleichmäßig verteilt sind, und dass die Unterantennen (2) um einen Winkel versetzt sind, der einem Bruchteil des Winkels zwischen zwei Zweigen (3) entspricht.

6. Vorrichtung nach einem der Ansprüche 1 bis 5, **dadurch gekennzeichnet, dass** die Unterantennen (2) um einen Winkel versetzt sind, der der Hälfte des Winkels zwischen zwei Zweigen (3) entspricht.

7. Vorrichtung nach einem der Ansprüche 1 bis 6, **dadurch gekennzeichnet, dass** das System zur Verarbeitung der von den Mikrofonen (4) kommenden Signale für die Verarbeitung von Signalen geeignet ist, die von beweglichen Quellen gesendet werden.

8. Vorrichtung nach einem der Ansprüche 1 bis 7, **dadurch gekennzeichnet, dass** die Zweige (3) der Unterantennen (2) gerade sind.

9. Vorrichtung nach einem der Ansprüche 1 bis 8, **dadurch gekennzeichnet, dass** jeder Zweig (3) zwischen 7 und 30 Mikrofone aufweist.

10. Vorrichtung nach einem der Ansprüche 1 bis 9, **dadurch gekennzeichnet, dass** jeder Zweig (3) eine Länge zwischen 1 m und 20 m hat.

11. Vorrichtung nach einem der Ansprüche 1 bis 10, **dadurch gekennzeichnet, dass** die Mikrofone (4) gleichmäßig verteilt sind.

12. Vorrichtung nach einem der Ansprüche 1 bis 11, **dadurch gekennzeichnet, dass** die Mikrofone (4) gleich sind.
